# EUROPEAN PATENT SPECIFICATION

(11) **EP 2 790 105 B1**
(45) Date of publication and mention of the grant of the patent: **09.12.2015**
(21) Application number: 14163991.4
(22) Date of filing: 09.04.2014
(51) Int. Cl.: G06F 11/20

(54) **Data reflecting method and system**
Datenreflexionsverfahren und -system
Système et procédé de réflexion de données

(30) Priority: 11.04.2013 JP 2013082598
(43) Date of publication of application: 15.10.2014
(73) Proprietor: Hitachi, Ltd., Tokyo 100-8280 (JP)
(72) Inventor: Fukagawa, Yusuke, Chiyoda-ku, Tokyo 100-8280 (JP)
(74) Representative: Moore, Graeme Patrick

(56) References cited:
- WO-A2-2007/075587
- US-A1- 2004 098 425

## Description

### BACKGROUND OF THE INVENTION

### 1. Field of the Invention

The present invention relates to a technology for reflecting transmitted data to a database, and particularly to a technology for reflecting data to a database managed as a backup provided in case of disaster, for example.

### 2. Description of the Related Art

WO2007/075587 provides systems and methods for performing data replication.

US2004/098425 describes a system providing improved methods for data replication.

Nowadays, data has been made redundant under control. For example, there is a plan to realize business continuity through data to be used at a time of disaster. The data used in daily business is saved to another location. A business continuity plan is formulated so that business still can be continued at an event of the disaster. Saving system data used during normal time to another location has been realized by use of a data transfer technology.

A technology for reducing the cost of ownership of a backup system exclusive for the time of disaster has been disclosed in JP-2005-234749-A. Therefore, the backup system of JP-2005-234749-A is provided with a server resource management database which stores therein a management table including priority to assign a shared server of a shared server resource group having a backup database to back up a plurality of user systems to each user system, and a server allocating system for allocating the shared server to each user system. A plurality of shared servers are used in common by a plurality of user systems even at the time other than the backup. At the time of backup, the server allocating system selects a user system on the basis of the priority of the management table and assigns a shared server thereto.

### SUMMARY OF THE INVENTION

At the above backup, data is transmitted (transferred) from the system that serves as the source. In the current data transfer technology, there is no established means for performing data storage processing in parallel when data is stored in a system used as a transfer destination, and improving efficiency in processing time required for the storage. In JP-2005-234749-A in particular, the allocation of a resource has been taken into consideration, but the transfer at that time is not taken account of. The present invention aims to improve efficiency in data transfer and reflection with the foregoing in view.

The present invention implements execution of data storage processing in parallel when storing data in a transfer destination system. As its implementing means, the parallelization of data storage processing is performed with a system having realized a disaster recovery (disaster countermeasure) as an assumption.

More specifically, the present invention assures ordering of elements constituting unit data like one transaction using a parallel key indicative of their ordering and executes parallelized reflection processing. This parallel key means that a column name that satisfies predetermined conditions is given the same parallel key, in accordance with which its control is performed. As the predetermined conditions, the determination on whether the column names or the like are the same controls the reflection processing.

According to the embodiment of the present invention, the reflection of data can be made efficient (speeded up).

The above, other objects and novel features of the present invention will become apparent from the description of the present specification and the accompanying drawings.

The present invention provides a data reflecting method and a data reflecting system as set forth in the appended independent claims 1 and 7.

### BRIEF DESCRIPTION OF THE DRAWINGS

FIG. 1 is a diagram showing a parallel key definition file used in one embodiment of the present invention;
FIG. 2 is a diagram illustrating a conditions matching confirmation flow in the one embodiment of the present invention;
FIG. 3 is a diagram depicting a final determination flow for the propriety of parallelization in the one embodiment of the present invention;
FIG. 4 is a diagram showing a processing flow at data transfer in the one embodiment of the present invention; and
FIG. 5 is a diagram illustrating a system configuration example for executing the one embodiment of the present invention.

### DESCRIPTION OF THE PREFERRED EMBODIMENTS

A preferred embodiment of the present invention will hereinafter be described by taking financial business for example. In the present embodiment, products for realizing data replication have heretofore been supplied from a software vender in terms of a disaster recovery, a data backup, or an aggregation of data from a plurality of systems to one database. These products are used particularly when the data are replicated between data centers.

In the related art technology, data (update information) created at a transfer source data center, at the time of the data replication, have been serially transferred to each transfer destination data center in the order they have been created. Further, when the data sent to the transfer destination data center are persisted (stored in database, for example) therein, the sent data have been persisted in order one by one. Since the data are persisted one by one even though they have been transmitted to the transfer destination data center in large quantities, this method takes time to complete data transfer (to persist all transferred data at the transfer destination data center).

Therefore, a processing system for establishing means for processing the persistence of data in parallel and improving performance thereof is realized. With a view toward realizing parallel processing of the data persistence, there has been devised a data parallel reflecting apparatus based on a processing system called a "parallel key." The present apparatus determines whether the data may be persisted in parallel when persisting the transferred data. The data capable of being persisted in parallel are persisted in parallel, and the data not capable of being persisted in parallel are serially persisted in accordance with serial processing.

The below indicates how parallel propriety is determined when two transactions {(1) and (2)} shown below are processed by way of example. The transaction is a unit of processing when a system performs business processing. A plurality of queries (database language) are included in one transaction. Further, the unit of data to be persisted by the present apparatus is a transaction unit.

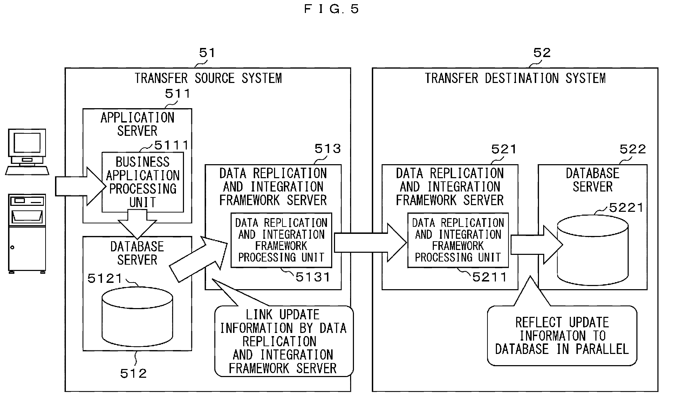

An example shown below is of an example of processing of a data parallel reflecting apparatus used in a transfer destination system. Further, a system configuration example is shown in FIG. 5. In FIG. 5, the data parallel reflecting apparatus is described as a data replication and integration framework server 521 of a transfer destination system 52. As shown in FIG. 5, the present system has a transfer source system 51 and the transfer destination system 52. These systems are connected therebetween via network not shown. The transfer source system 51 has an application server 511 which executes business processing, a database server 512 which stores data used in the business processing, and a data replication and integration framework server 513 which constructs a system base common to the transfer destination system 52. Further, the transfer destination system 52 has the data replication and integration framework server 521 which constructs a system base common to the transfer source system 51, and a database server 522 which stores data similar to the data stored in the database server 512. These servers are mutually connected therebetween by private line network such as a LAN.

The application server 511 has a business application processing unit 5111 which executes business processing. The database server 522 has a database 5121 which stores update information according to the business processing and a parallel key definition file to be described later. The data replication and integration framework server 513 has a data replication and integration framework processing unit 5131 which shares a system base with the transfer destination system 52 and cooperates or links data.

The data replication and integration framework server 521 has a data replication and integration framework processing unit 5211 which shares a system base with the transfer source system 51 and cooperates or links data. The database server 522 has a database 5221 similar to the data base that the above-described database server 522 includes. Each processing shown subsequently is carried out by the business application processing unit 5111, data replication and integration framework processing unit 5131, and data replication and integration framework processing unit 5211 mentioned above. The processing is actually implemented by allowing an arithmetic unit such as a CPU provided with each server to execute a program. (1) A thousand yen, i.e., 1,000 yen is transferred from a bank account of Taro Hitachi (column ACCOUNT_ID=100) to a bank account of Hanako Hitachi (column ACCOUNT_ID=200). (2) An address is changed in personal information of Taro Hitachi (column ACCOUNT_ID=100).

### (1) Transaction A for transferring 1,000 Yen the bank account of Taro Hitachi to the bank account of Hanako Hitachi

When the transaction A of (1) is processed, two queries are assumed to be executed by way of example. The queries to be executed are as follows:
(Query 1) 1,000 is subtracted from the balance of account information of Taro Hitachi in a table ACCOUNT_TABLE having account information of Taro Hitachi (column ACCOUNT_ID=100).
(Query 2) 1,000 is added to the balance of account information of Hanako Hitachi in a table ACCOUNT_TABLE having account information of Hanako Hitachi (column ACCOUNT_ID=200).

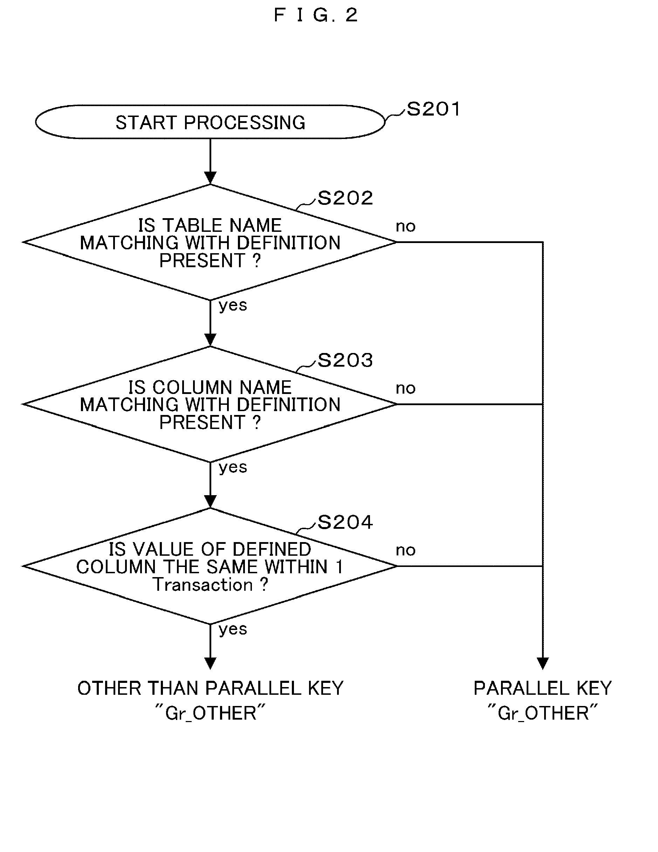

The above transaction A is applied to the conditions matching confirmation flow of FIG. 2.

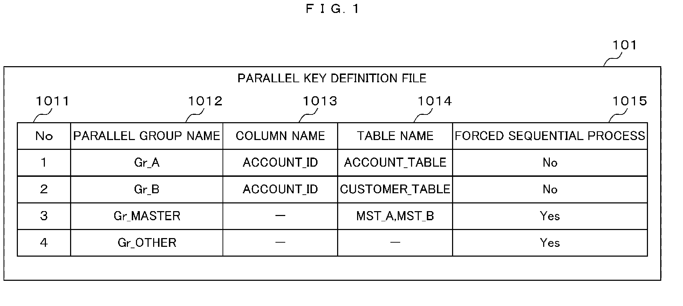

In a process at 202 in the conditions matching confirmation flow shown in FIG. 2, the data replication and integration framework processing unit 5211 included in the data replication and integration framework server 521 of the transfer destination system 52 refers to a 1014 "table name" of a parallel key definition file shown in FIG. 1 to be able to confirm that the "table name" corresponds to the table name ACCOUNT_TABLE included in the query 1. Therefore, a determination result of the process at 202 of the conditions matching confirmation flow shown in FIG. 2 is "Yes". Incidentally, the parallel key definition file is stored in, for example, the database server of the transfer source system 51 or the transfer destination system 52. The description on each column in the parallel key definition file will be made later.

In a process at 203 in the conditions matching confirmation flow shown in FIG. 2, the data replication and integration framework processing unit 5211 refers to a 1013 "column name" of the parallel key definition file shown in FIG. 1 to be able to confirm that the "column name" corresponds to the column name ACCOUNT_ID included in the query 1. Therefore, a determination result of the process at 203 of the conditions matching confirmation flow shown in FIG. 2 is "Yes".

In a process at 204 of the conditions matching confirmation flow shown in FIG. 2, the data replication and integration framework processing unit 5211 refers to the values of the column ACCOUNT_IDs in the queries 1 and 2 included in the transaction A and determines whether both correspond to each other. Since in the transaction A the value of ACCOUNT_ID is 100 in the query 1 and the value of ACCOUNT_ID is 200 in the query 2, the values of the column ACCOUNT_IDs in the transaction A are not the same. The data replication and integration framework processing unit 5211, therefore, takes a determination result of the process at 204 in the conditions matching confirmation flow shown in FIG. 2 as "No." When the conditions matching confirmation flow shown in FIG. 2 is applied to the transaction A, a parallel key is accordingly determined to be "Gr_OTHER".

### (2) Transaction B for changing the address in the personal information of Taro Hitachi (column ACCOUNT_ID=100)

When the transaction of (2) is processed, two queries are assumed to be executed by way of example. The queries to be executed are as follows:
(Query 1) The personal information is acquired from a table CUSTOMER_TABLE having personal information on Taro Hitachi (column ACCOUNT_ID=100).
(Query 2) The address of Taro Hitachi is changed with respect to address information of the table CUSTOMER_TABLE having the personal information on Taro Hitachi (column ACCOUNT_ID=100).

The above transaction B is applied to the conditions matching confirmation flow shown in FIG. 2. When the 1014 "table name" of the parallel key definition file shown in FIG. 1 is confirmed in the process at 202 of the conditions matching confirmation flow shown in FIG. 2, it is possible to confirm that the 1014 "table name" corresponds to the table name CUSTOMER_TABLE in the 1014 "table name" of No. 2 in the parallel key definition file shown in FIG. 1. Therefore, the determination result of the process at 202 of the conditions matching confirmation flow shown in FIG. 2 is "YES".

In the process at 203 of the conditions matching confirmation flow shown in FIG. 2, the data replication and integration framework processing unit 5211 refers to a 1013 "column name" of the parallel key definition file shown in FIG. 1 to be able to confirm that the "column name" corresponds to the column ACCOUNT_ID included in the query 2. Therefore, the determination result of the process at 203 of the conditions matching confirmation flow shown in FIG. 2 is "YES".

In the process at 204 of the conditions matching confirmation flow shown in FIG. 2, the data replication and integration framework processing unit 5211 refers to the values of the column ACCOUNT_IDs of the queries 1 and 2 included in the transaction B and determines whether both correspond to each other. Since in the transaction B the value of the ACCOUNT_ID is 100 in the query 1, and the value of ACCOUNT_ID is 100 in the query 2 as well, the value of the column ACCOUNT_ID is the same in the transaction B. Therefore, the data replication and integration framework processing unit 5211 determines the determination result of the process at 204 of the conditions matching confirmation flow shown in FIG. 2 to be "Yes". When the conditions matching confirmation flow shown in FIG. 2 is applied to the transaction B, the parallel key accordingly assumes "Gr_B" at No2 of a 1012 "parallelization group name" in the parallel key definition file shown in FIG. 1.

As a result of application of the conditions matching confirmation flow of FIG. 2 to the above transactions A and B, the transaction A becomes "unparallelizable", and the transaction B becomes "parallelizable". The transactions A and B are subjected to the persisting process in parallel when a persisting process is performed.

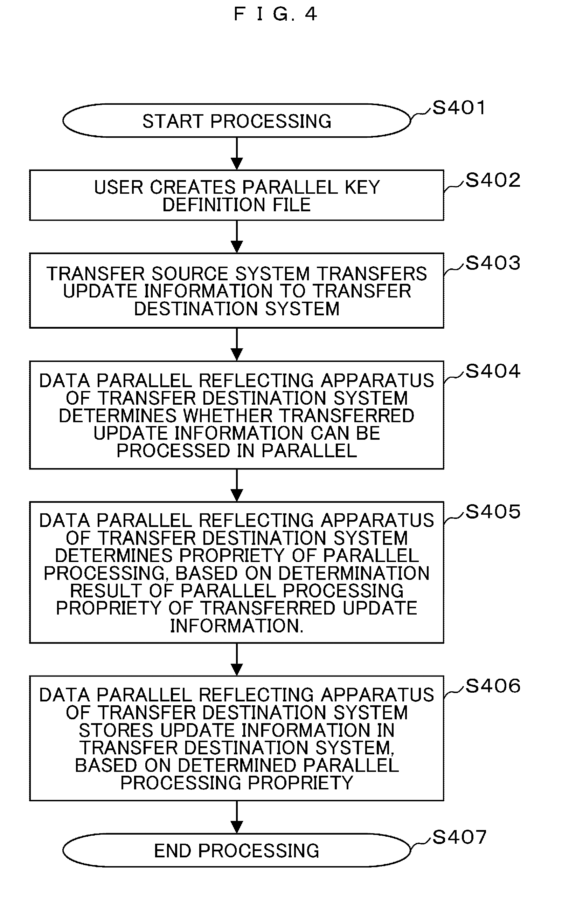

The flow of the entire process in the present embodiment will be described below in accordance with the processing flow at the time of the data transfer in FIG. 4.

### (Determination of conditions for parallelization propriety by user (creation of parallel key definition file))

At 402 of FIG. 4, the user of this processing system defines conditions for parallelizable data and for non-parallelizable data with respect to each column of the parallel key definition file of FIG. 1 from an input device of a computer connected to the application server 511 of the transfer source system 51 as shown in FIG. 5. The columns to be confirmed that is used for determination as to the propriety of parallelization are the "table name", "column name", and "value of specified column".

The 1012 "parallelization group name" of the parallel key definition file shown in FIG. 1 defines the name to uniquely specify the conditions for determining the parallelization propriety. Information (including member ID and stock name ID) to uniquely determine data is defined in the 1013 "column name" of the parallel key definition file shown in FIG. 1. It is possible to define only one column name. A table name included in data targeted for conditions to be defined is defined in the 1014 "table name" of the parallel key definition file shown in FIG. 1. The table name can be defined in a plural form.

A flag for specifying whether a forced serial process (unparallelizable) is taken is defined in a 1015 "forced serial process" of the parallel key definition file shown in FIG. 1. Upon receiving an input of such information from the input device, the computer sends the input to the application server 511, where the business application processing unit 5111 thereof allows the database server 5121 to store the information. The data replication and integration framework processing unit 5131 included in the data replication and integration framework server 513 of the transfer source system 51 acquires the parallel key definition file stored in the database and transmits it to the transfer destination system 52. The data replication and integration framework processing unit 5211 of the transfer destination system 52 stores the parallel key definition file received from the transfer source system 51 in the database 5221.

### (Transfer of update information to transfer destination in transfer source system 51)

At 403 of FIG. 4, the data replication and integration framework processing unit 5131 of the data replication and integration framework server 513 included in the transfer source system 51 transfers the update information of the database of the transfer source system 51, which has been updated by the business application processing unit 5111 of the application server 511, to the transfer destination system 52 in a transaction unit. As the device for the data transfer, there can be utilized one that a bender provides.

### (Determination as to data transferred to transfer destination)

At 404 of FIG. 4, the data replication and integration framework processing unit 5211 of the data replication and integration framework server 521 determines in accordance with the conditions matching confirmation flow shown in FIG. 2 whether the transferred data corresponds to any conditions of the parallel key definition file shown in FIG. 1. The result is eventually determined whether the group name should be "Gr_OTHER" or one other than that. Data in which the group name is determined to be "Gr_OTHER" becomes unparallelizable. Data in which the group name is determined to be the group name other than "Gr_OTHER" conforms to a forced serial process flag specified to its group. "Gr_OTHER" needs to always exist in the parallel key definition file shown in FIG. 1. Further, "Gr_OTHER" is a fixed value indicative of unparallelizable.

At 202 of the conditions matching confirmation flow shown in FIG. 2, the data replication and integration framework processing unit 5211 of the data replication and integration framework server 521 determines whether the table name defined in the 1014 "table name" of the parallel key definition file shown in FIG. 1 is included in the transferred data. At 203 of the conditions matching confirmation flow shown in FIG. 2, the data replication and integration framework processing unit 5211 determines whether the column name defined in the 1013 "column name" of the parallel key definition file shown in FIG. 1 is included in the transferred data. At 204 of the conditions matching confirmation flow shown in FIG. 2, the data replication and integration framework processing unit 5211 determines whether the value of the column defined in the 1013 "column name" of the parallel key definition file of FIG. 1 takes the same value in the transferred data. There is a case where the same column name exists in a plural form within the transferred data (such as a case where a plurality of queries are included). When the same column name exists in a plural form and the column name is defined at 1013 of the parallel key definition file shown in FIG. 1, the value stored in each column is confirmed in the present processing system. The present apparatus confirms whether the values of the same column names are all the same in the transferred data. It is determined whether the transferred data ca be parallelized in accordance with this determination.

### (Determination as to parallelization propriety of persisting process at transfer destination)

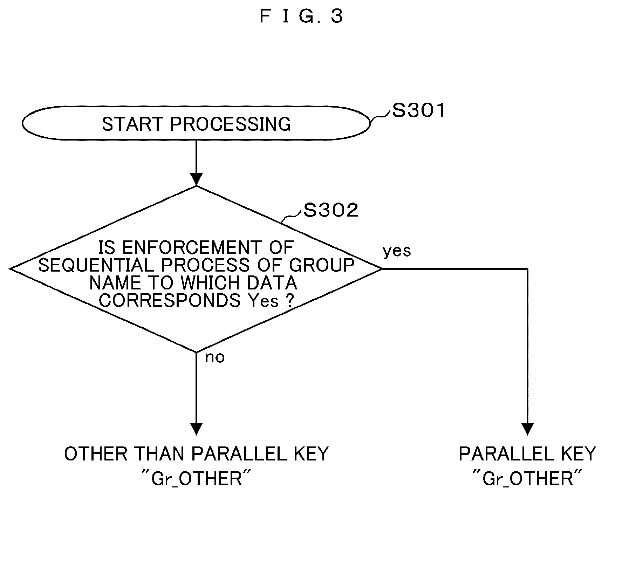

A process at 405 of FIG. 4 will be described. At this step, it is determined to which conditions (group name) the data transferred up to 404 of FIG. 4 corresponds. After the group name has been determined, the data replication and integration framework processing unit 5211 finally determines the propriety of parallelization of the persisting process through the 1015 "forced serial process" flag of the parallel key definition file shown in FIG. 1 in the group name. The final determination as to the parallelization propriety of the persisting process confirms to the final determination flow for the propriety of parallelization shown in FIG. 3.

When the 1015 "forced serial process" of the parallel key definition file shown in FIG. 1 is "Yes", the data replication and integration framework processing unit 5211 determines the parallelization of the persisted process to be impossible in accordance with 302 in FIG. 3. That is, when "Yes" is taken, data having matched its conditions is treated to be same as the group name "Gr_OTHER". When the 1015 "forced serial process" of the parallel key definition file shown in FIG. 1 is "No", the data replication and integration framework processing unit 5211 determines the parallelization of the persisting process to be possible.

### (Process after determination as to propriety of parallelization at transfer destination)

At 406 in FIG. 4, the data replication and integration framework processing unit 5211 performs the persisting process, based on the parallelization propriety of the persisting process of the transferred data, which has been determined up to 405 in FIG. 4.

When the transferred data corresponds to the group name "Gr_OTHER", for example, the data replication and integration framework processing unit 5211 does not parallelize the data but serially persists all data corresponding to "Gr_OTHER" one by one.

At the same time, the data replication and integration framework processing unit 5211 persists corresponding data other than the group name "Gr_OTHER" in parallel with the data corresponding to "Gr_OTHER".

## Claims

1. A data reflecting method for reflecting data of a transfer source system to a transfer destination system, the method comprising:
determining, on the basis of a column name and a table name included in data to be processed and a column name and a table name stored in a parallel key definition file in which a parallel key for determining whether a plurality of data are processed in parallel, and includes the column name and the table name included in the respective data is defined, whether the respective data among the plurality of the data to be processed are executable in parallel; and
reflecting the each data to the transfer destination system in parallel when the data are determined to be executable in parallel.

2. The data reflecting method according to claim 1, wherein:
the data is transaction data for financial business; and
the element is processing content that constitutes the transaction.

3. The data reflecting method according to claim 1 or 2, wherein the parallel key satisfies a predetermined condition for a column name included in the data.

4. The data reflecting method according to claim 1, wherein the respective data are forced to be serially-processed when the respective data are determined not to be executable in parallel.

5. The data reflecting method according to claim 1, wherein:
the data to be processed are transaction data; and
the data are determined to be processable in parallel when the column and table names included in the transaction data and the column name and the table name stored in the parallel key definition file correspond to each other and a value of these column names is same.

6. The data reflecting method according to claim 1, wherein the respective data determined to be processable in parallel are reflected to the transfer destination system as a result of updating to a database included in the transfer destination system.

7. A data reflecting system for reflecting data of a transfer source system (51) to a transfer destination system (52), comprising:
a data replication and integration framework processing unit (5131) arranged to
determine, on the basis of a column name and a table name included in data to be processed and a column name (1013) and a table name (1014) stored in a parallel key definition file (101) in which a parallel key for determining whether a plurality of data are processed in parallel, and includes the column name and the table name included in the respective data is defined, whether the respective data among the plurality of the data to be processed are executable in parallel; and to
reflect the each data to the transfer destination system (52) in parallel when the data are determined to be executable in parallel.

8. The data reflecting system according to claim 7, wherein:
the data is transaction data for financial business.

9. The data reflecting system according to claim 7 or 8, wherein the parallel key satisfies a predetermined condition for a column name included in the data.

10. The data reflecting system according to claim 7, wherein the respective data are forced to be serially-processed when the respective data are determined not to be executable in parallel.

11. The data reflecting system according to claim 7, wherein:
the data to be processed are transaction data; and
the data are determined to be processable in parallel when the column and table names included in the transaction data the column name and the table name stored in the parallel key definition file correspond to each other and a value of these column names is same.

12. The data reflecting system according to claim 7, wherein the respective data determined to be processable in parallel are reflected to the transfer destination system as a result of updating to a database included in the transfer destination system.

## Patentansprüche

1. Datenspiegelungsverfahren zum Spiegeln von Daten eines Übertragungsquellensystems zu einem Übertragungszielsystem, wobei in dem Verfahren
auf Basis eines Spaltennamens und eines Tabellennamens, die in den zu verarbeitenden Daten enthalten sind, sowie eines Spaltennamens und eines Tabellennamens, die in einer Parallelschlüssel-Defintionsdatei gespeichert sind, in der ein Parallelschlüssel definiert ist, um zu bestimmen, ob mehrere Daten parallel zu verarbeiten sind, und die den Spaltennamen und den Tabellennamen aufweist, die in den zugehörigen Daten enthalten sind, bestimmt wird, ob die zugehörigen Daten unter den mehreren zu verarbeitenden Daten parallel ausführbar sind, und
die jeweiligen Daten zu dem Übertragungszielsystem parallel gespiegelt werden, wenn die Daten als parallel ausführbar bestimmt werden.

2. Datenspiegelungsverfahren nach Anspruch 1, wobei
die Daten Transaktionsdaten für Finanzgeschäfte sind, und
das Element ein Verarbeitungsinhalt ist, der die Transaktion bildet.

3. Datenspiegelungsverfahren nach Anspruch 1 oder 2, wobei der Parallelschlüssel eine vorbestimmte Bedingung für einen in den Daten enthaltenen Spaltennamen erfüllt.

4. Datenspiegelungsverfahren nach Anspruch 1, wobei die zugehörigen Daten erzwungenermaßen seriell verarbeitet werden, wenn die zugehörigen Daten als nicht parallel ausführbar bestimmt werden.

5. Datenspiegelungsverfahren nach Anspruch 1, wobei die zu verarbeitenden Daten Transaktionsdaten sind, und die Daten als parallel verarbeitbar bestimmt werden, wenn die in den Transaktionsdaten enthaltenen Spalten- und Tabellennamen und die in der Parallelschlüssel-Definitionsdatei gespeicherten Spaltennamen und Tabellennamen einander entsprechen und ein Wert dieser Spaltennamen gleich ist.

6. Datenspiegelungsverfahren nach Anspruch 1, wobei die als parallel verarbeitbar bestimmten zugehörigen Daten zu dem Übertragungszielsystem als ein Ergebnis einer Aktualisierung einer Datenbank gespiegelt werden, die in dem Übertragungszielsystem enthalten ist.

7. Datenspiegelungssystem zum Spiegeln von Daten eines Übertragungsquellensystems (51) zu einem Übertragungszielsystem (52), mit
einem Datenreplikations- und integrationsrahmenverarbeitungseinheit (5131), die dazu ausgelegt ist
auf Basis eines Spaltennamens und eines Tabellennamens, die in den zu verarbeitenden Daten enthalten sind, sowie eines Spaltennamens (1013) und eines Tabellennamens (1014), die in einer Parallelschlüssel-Defintionsdatei (101) gespeichert sind, in der ein Parallelschlüssel definiert ist, um zu bestimmen, ob mehrere Daten parallel zu verarbeiten sind, und die den Spaltennamen und den Tabellennamen aufweist, die in den zugehörigen Daten enthalten sind, zu bestimmen, ob die zugehörigen Daten unter den mehreren zu verarbeitenden Daten parallel ausführbar sind, und
die jeweiligen Daten zu dem Übertragungszielsystem (52) parallel zu spiegeln, wenn die Daten als parallel ausführbar bestimmt werden.

8. Datenspiegelungssystem nach Anspruch 7, wobei die Daten Transaktionsdaten für Finanzgeschäfte sind

9. Datenspiegelungssystem nach Anspruch 7 oder 8, wobei der Parallelschlüssel eine vorbestimmte Bedingung für einen in den Daten enthaltenen Spaltennamen erfüllt.

10. Datenspiegelungssystem nach Anspruch 7, wobei die zugehörigen Daten erzwungenermaßen seriell verarbeitet werden, wenn die zugehörigen Daten als nicht parallel ausführbar bestimmt werden.

11. Datenspiegelungssystem nach Anspruch 7, wobei die zu verarbeitenden Daten Transaktionsdaten sind, und die Daten als parallel verarbeitbar bestimmt werden, wenn die in den Transaktionsdaten enthaltenen Spalten- und Tabellennamen und die in der Parallelschlüssel-Definitionsdatei gespeicherten Spaltennamen und Tabellennamen einander entsprechen und ein Wert dieser Spaltennamen gleich ist.

12. Datenspiegelungssystem nach Anspruch 7, wobei die als parallel verarbeitbar bestimmten zugehörigen Daten zu dem Übertragungszielsystem als ein Ergebnis einer Aktualisierung einer Datenbank gespiegelt werden, die in dem Übertragungszielsystem enthalten ist.

## Revendications

1. Procédé de réflexion de données pour réfléchir des données d'un système source de transfert vers un système de destination de transfert, le procédé comportant les étapes consistant à :
déterminer, sur la base d'un nom de colonne et d'un nom de tableau compris dans des données à traiter et d'un nom de colonne et d'un nom de tableau mémorisés dans un fichier de définition de clé parallèle dans lequel une clé parallèle destinée à déterminer si une pluralité de données sont traitées en parallèle, et comprend le nom de colonne et le nom de tableau inclus dans les données respectives est définie, si les données respectives parmi la pluralité de données à traiter sont exécutables en parallèle, et
réfléchir chacune des données vers le système de destination de transfert en parallèle lorsque les données sont déterminées comme étant exécutables en parallèle.

2. Procédé de réflexion de données selon la revendication 1, dans lequel :
les données sont des données de transaction pour une activité financière, et
l'élément est un contenu de traitement qui constitue la transaction.

3. Procédé de réflexion de données selon la revendication 1 ou 2, dans lequel la clé parallèle satisfait une condition prédéterminée pour un nom de colonne compris dans les données.

4. Procédé de réflexion de données selon la revendication 1, dans lequel les données respectives sont amenées de force à être traitées en série lorsque les données respectives sont déterminées comme n'étant pas exécutables en parallèle.

5. Procédé de réflexion de données selon la revendication 1, dans lequel :
les données à traiter sont des données de transaction, et
les données sont déterminées comme pouvant être traitées en parallèle lorsque les noms de tableau et de colonne compris dans les données de transaction et le nom de colonne et le nom de tableau mémorisés dans le fichier de définition de clé parallèle correspondent entre eux et une valeur de ces noms de colonne est identique.

6. Procédé de réflexion de données selon la revendication 1, dans lequel les données respectives déterminées comme devant être traitées en parallèle sont réfléchies vers le système de destination de transfert en résultat de la mise à jour dans une base de données comprise dans le système de destination de transfert.

7. Système de réflexion de données pour réfléchir des données d'un système source de transfert (51) vers un système de destination de transfert (52), comportant :
une unité de traitement de cadre d'intégration et de réplication de données (5131) conçue pour
déterminer, sur la base d'un nom de colonne et d'un nom de tableau compris dans des données à traiter et d'un nom de colonne (1013) et d'un nom de tableau (1014) mémorisés dans un fichier de définition de clé parallèle (101) dans lequel une clé parallèle destinée à déterminer si une pluralité de données sont traitées en parallèle, et comprend le nom de colonne et le nom de tableau compris dans les données respectives est définie, si des données respectives parmi la pluralité de données à traiter sont exécutables en parallèle, et pour
réfléchir chacune des données vers le système de destination de transfert (52) en parallèle lorsque les données sont déterminées comme pouvant être exécutées en parallèle.

8. Système de réflexion de données selon la revendication 7, dans lequel :
les données sont des données de transaction pour une activité financière.

9. Système de réflexion de données selon la revendication 7 ou 8, dans lequel la clé parallèle satisfait une condition prédéterminée pour un nom de colonne compris dans les données.

10. Système de réflexion de données selon la revendication 7, dans lequel les données respectives sont amenées de force à être traitées en série lorsque les données respectives sont déterminées comme n'étant pas exécutables en parallèle.

11. Système de réflexion de données selon la revendication 7, dans lequel :
les données à traiter sont des données de transaction, et
les données sont déterminées comme pouvant être traitées en parallèle lorsque les noms de colonne et de tableau compris dans les données de transaction et le nom de colonne et le nom de tableau mémorisés dans le fichier de définition de clé parallèle correspondent entre eux et une valeur de ces noms de colonne est identique.

12. Système de réflexion de données selon la revendication 7, dans lequel les données respectives déterminées comme pouvant être traitées en parallèle sont réfléchies vers le système de destination de transfert en résultat de la mise à jour dans une base de données comprise dans le système de destination de transfert.
